# EUROPÄISCHE PATENTANMELDUNG

(11) **EP 4 381 948 A1**
(43) Veröffentlichungstag der Anmeldung: **12.06.2024**
(21) Anmeldenummer: 23210790.4
(22) Anmeldetag: 20.11.2023
(51) Int. Cl.: A21B 7/00

(54) **VERFAHREN ZUM BETREIBEN EINER BACK- UND VERKAUFSANLAGE**

(30) Priorität: 07.12.2022 DE 102022132553
(71) Anmelder: Shop-IQ GmbH & Co. KG, 97421 Schweinfurt Bayern (DE)
(72) Erfinder: LEPPIG, Joachim, 97421 Schweinfurt (DE)
(74) Vertreter: Gosdin, Carstensen & Partner Patentanwälte Partnerschaftgesellschaft mbB

(57) **Zusammenfassung**

Die Erfindung betrifft ein Verfahren zum Betreiben einer Back- und Verkaufsanlage (1) für mindestens zwei verschiedene Backwaren-Arten (2), bei dem in einem Backofen (3) Backwaren mindestens einer Art gebacken werden und die gebackenen Backwaren (2) anschließend in eine Verkaufsstation (4, Bake-Off-Station) verbracht werden, die eine Anzahl Aufnahmekammern (5) für jeweils eine Art Backwaren (2) aufweist, wobei das Backen der Backwaren erfolgt durch: a) Ermittlung der Anzahl der Backwaren oder der zeitlichen Veränderung der Anzahl der Backwaren, die sich in einer Aufnahmekammer (5) der Verkaufsstation (4) befinden; b) Mittels einer Maschinensteuerung (6): Vergleichen der ermittelten Anzahl der Backwaren oder der zeitlichen Veränderung der Anzahl der Backwaren mit einem vorgegebenen Grenzwert (G_{Grenz}), der in der Maschinensteuerung (6) gespeichert ist, c) Auslösen eines Backvorgangs, sobald der gemessene Wert (G) den gespeicherten Grenzwert (G_{Grenz}) unterschreitet. Um das Bedienungspersonal darin zu unterstützen, dass stets ein optimaler Bestand an Backwaren der verschiedenen Arten bereitgestellt sind, sieht die Erfindung vor, dass das Auslösen des Backvorgangs gemäß Schritt c) die Ausgabe eines Hinweissignals umfasst, wobei das Hinweissignal ein akustisches oder ein visuelles Signal ist oder wobei das Hinweissignal das Versenden einer Nachricht an ein Smartphone ist.

## Beschreibung

Die Erfindung betrifft ein Verfahren zum Betreiben einer Back- und Verkaufsanlage für das Backen und Verkaufen mindestens zweier verschiedener Backwaren-Arten, bei dem in einem Backofen Backwaren mindestens einer Art gebacken werden und die gebackenen Backwaren anschließend in eine Verkaufsstation verbracht werden, die eine Anzahl Aufnahmekammern für jeweils eine Art Backwaren aufweist, aus denen Kundschaft die gewünschten Backwaren entnehmen kann, wobei das Backen der Backwaren erfolgt durch:
a) Ermittlung der Anzahl der Backwaren oder der zeitlichen Veränderung der Anzahl der Backwaren, die sich in einer Aufnahmekammer der Verkaufsstation befinden;
b) Mittels einer Maschinensteuerung: Vergleichen der ermittelten Anzahl der Backwaren oder der zeitlichen Veränderung der Anzahl der Backwaren mit einem vorgegebenen Grenzwert, der in der Maschinensteuerung gespeichert ist;
c) Auslösen eines Backvorgangs, sobald der gemessene Wert den gespeicherten Grenzwert unterschreitet.

Insbesondere in Supermärkten sind gattungsgemäße Back- und Verkaufsanlagen im Einsatz, in denen angelieferte Teiglinge, die in der Regel in einer Kühlung vorgehalten werden, in einem Backofen (auf)gebacken werden, um anschließend in der Verkaufsstation zur Entnahme durch einen Kunden bereitgestellt werden. Diese sogenannten Bake-Off-Stationen umfassen eine Anzahl von Aufnahmekammern, in denen jeweils eine Art einer Backware in entsprechender Anzahl zur Selbstentnahme durch die Kundschaft platziert wird.

Gewünscht ist es dabei, stets eine hinreichende Anzahl der einzelnen Arten an Backwaren mit hohem Grad an Frische bereitzuhalten.

Ein Verfahren der gattungsgemäßen Art offenbart die DE 203 02 346 U1**.** Ein ähnliches Verfahren wird in der DE 10 2005 012 536 A1 beschrieben.

Nachteilig ist es, dass bei den vorbekannten Systemen der genannte Wunsch häufig von der Qualifikation des Personals abhängig ist, die für das (Auf)Backen von Backwaren und das Bestücken der Bake-Off-Station zu sorgen haben. Insbesondere, wenn Hilfspersonal mit geringer Qualifikation zur Aufrechterhaltung des Betriebs der beschriebenen Back- und Verkaufsanlagen eingesetzt wird, kann es mitunter zu Problemen bei der Bedienung kommen.

Der Erfindung liegt daher die Aufgabe zugrunde, ein Verfahren der gattungsgemäßen Art bereitzustellen, mit dem in verbesserter Weise die Bereitstellung aller benötigter Arten an Backwaren mit einem hohen Frischegrad ermöglicht wird. Insbesondere soll dem Personal, welches für die Aufrechterhaltung des Betriebs der Anlage verantwortlich ist, eine effiziente Hilfestellung für die optimale Bedienung der Anlage an die Hand gegeben werden. Somit soll das Bedienungspersonal bestmöglich darin unterstützt werden, dass stets ein optimaler Bestand an Backwaren der verschiedenen Arten bereitgestellt ist.

Die Lösung dieser Aufgabe durch die Erfindung ist dadurch gekennzeichnet, dass das Auslösen des Backvorgangs gemäß obigem Schritt c) die Ausgabe eines Hinweissignals (für das Servicepersonal, welches in der Verkaufsstätte tätig ist) umfasst, wobei das Hinweissignal ein akustisches oder ein visuelles Signal ist und/oder wobei das Hinweissignal das Versenden einer Nachricht an ein Smartphone ist.

Durch die vorgeschlagene Vorgehensweise wird in einfacher und effizienter Weise das Personal darauf hingewiesen, dass gewisse Maßnahmen aktuell zu ergreifen sind, um die optimale Befüllung der Bake-Off-Station mit frischer Backware zu gewährleisten. Erfindungsgemäß kann das Hinweissignal ein akustisches oder visuelles Signal sein, gleichermaßen auch das Versenden einer Nachricht an ein Smartphone, durch welches eine Person des Servicepersonals auf die erforderliche Maßnahme hingewiesen wird.

Eine bevorzugte und einfache Durchführung dieses Konzepts sieht vor, dass die Ermittlung der Anzahl der Backwaren oder der zeitlichen Veränderung der Anzahl der Backwaren gemäß obigem Schritt a) durch Wiegen der Backwaren zwecks Bestimmung des Gesamtgewichts der sich in einer Aufnahmekammer befindlichen Backwaren oder zwecks Ermittlung der zeitlichen Veränderung des Gesamtgewichts erfolgt, wobei gemäß obigem Schritt b) in der Maschinensteuerung ein Vergleichen des gemessenen Gesamtgewichts oder der zeitlichen Veränderung des Gesamtgewichts mit einem vorgegebenen Grenzwert erfolgt.

Eine hierzu alternative Möglichkeit stellt darauf ab, dass die Ermittlung der Anzahl der Backwaren oder der zeitlichen Veränderung der Anzahl der Backwaren gemäß obigem Schritt a) durch Erfassung des Inhalt der Aufnahmekammer mittels einer Kamera erfolgt, wobei die von der Kamera erfassten Bilder durch die Maschinensteuerung ausgewertet werden und wobei gemäß obigem Schritt b) in der Maschinensteuerung ein Vergleichen der ermittelten Anzahl an Backwaren oder deren zeitliche Veränderung mit einem vorgegebenen Grenzwert erfolgt. Hiernach wird also durch die Kamera der Inhalt an Backwaren in der Aufnahmekammer erfasst und durch Bilderkennung (mittels an sich bekannter Methoden der Künstlichen Intelligenz) die Anzahl der Backwaren ermittelt.

Möglich ist auch die Kombination der beiden genannten Vorgehensweisen bei der Ermittlung der Anzahl der Backwaren bzw. der zeitlichen Veränderung derselben, d. h. sowohl das Wiegen als auch die Erfassung per Kamera. Bei dieser Vorgehensweise besteht gegebenenfalls aufgrund des Einsatzes der Kamera auch die Möglichkeit, die Person, die Backwaren aus der Aufnahmekammer entnimmt, zu identifizieren und diese Informationen für den Bezahlvorgang zu nutzen, der so gegebenenfalls automatisiert werden kann.

Beim Auslösen des Backvorgangs durch die Maschinensteuerung gemäß obigem Schritt c) werden bevorzugt auch die dem Backvorgang vorangehenden Zeiten sowie die Zeiten für das Aufheizen des Backofens berücksichtigt. Die dem Backvorgang vorangehenden Zeiten sind dabei insbesondere die Zeit für das Herausnehmen der zu backenden Backwaren aus der Kühlung, gegebenenfalls die Zeit für das Auftauen von Teiglingen und die gegebenenfalls relevanten Gärzeiten.

Der in der Maschinensteuerung gespeicherte Grenzwert kann auch als zeitvariante Größe vorgegeben werden. Hierbei ist insbesondere vorgesehen, dass der in der Maschinensteuerung gespeicherte Grenzwert als Funktion des Wochentages und der Uhrzeit vorgegeben wird. Hiermit kann für eine kurzfristige Vorhersage (für 2 bis 3 Stunden) das (früher) statistisch erfasste und ausgewertete Verkaufsverhalten berücksichtigt werden. Möglich ist es auch, bei den hinterlegten Grenzwerten Wetterdaten zu berücksichtigen, die aus früheren statistischen Untersuchungen vorliegen und darauf schließen lassen, bei welchen Wetterverhältnissen welche Backwaren bevorzugt gekauft werden.

Bei dieser Vorgehensweise können also zu erwartende Verkäufe der einzelnen Arten an Backwaren für die nächsten Stunden berücksichtigt werden.

Bei der Vorgabe der Grenzwerte kann schließlich, sobald der Geschäftsschluss naht, berücksichtigt werden, dass gewisse (oder auch alle) Arten von Backwaren auslaufen können (sogenannte Food-waste-Berücksichtigung). Hiermit wird erreicht, dass bei Geschäftsschluss möglichst wenige übrig gebliebenen Backwaren vorliegen.

Schließlich kann vorgesehen werden, dass die in der Maschinensteuerung gespeicherten Grenzwerte für eine Anzahl verschiedener Arten Backwaren gespeichert werden, wobei für jede Art der Backwaren individuelle Vorlaufzeiten für den Backvorgang, insbesondere jeweilige Zeiten für das Aufheizen des Backofens, hinterlegt sind.

Das vorgeschlagene Konzept basiert also darauf, die Anzahl und insbesondere das Gewicht der Backwaren, die sich in einer Aufnahmekammer befinden, zu ermitteln. Da im Allgemeinen das Gewicht der einzelnen Backware sehr genau bekannt ist, kann, im Falle der Ermittlung durch Wiegen, die Maschinensteuerung durch Division durch das Einzelgewicht die Anzahl der sich in der Aufnahmekammer befindlichen Backwaren einfach ermitteln und mit einem Grenzbestand vergleichen. Wird ein vorgegebener Grenzbestand unterschritten, wird das (Nach)Backen von Backwaren der fraglichen Art veranlasst. Dabei ist ein wesentlicher Aspekt, dass das Auslösen des Backvorgangs (gemäß obigem Schritt c) die Ausgabe eines Hinweissignals umfasst (in Form eines akustischen oder eines visuellen Signals bzw. durch Versenden einer Nachricht an ein Smartphone), so dass das zuständige Personal für die Bedienung der Anlage zuverlässig darauf hingewiesen wird, dass eine Maßnahme zur Aufrechterhaltung des optimalen Betriebs der Anlage erforderlich ist; besagtes Personal kann dann zum richtigen Zeitpunkt entsprechend aktiv werden.

Durch die Systemsteuerung ausgelöst bzw. initiiert wird dabei der eigentliche Backvorgang unter Berücksichtigung erforderlicher Vorlaufzeiten. Dies betrifft insbesondere die Herausnahme von aufzubackenden Teiglingen aus der Kühlung und das Gärenlassen derselben bei Zimmertemperatur. Ferner wird die benötigte Zeit für das Aufheizen des Backofens für die konkrete Art der Backwaren berücksichtigt.

Die Durchführung der genannten Verfahrensschritte und insbesondere des Schritts des Wiegens des Inhalts einer Aufnahmekammer erfolgt dabei sich periodisch wiederholend, um zeitnah Veränderungen erfassen zu können.

Oben wurde alternativ zur Messung der Anzahl der Backwaren, insbesondere des Gesamtgewichts, in einer Aufnahmekammer davon gesprochen, dass auch die zeitliche Veränderung der Anzahl, insbesondere des Gesamtgewichts, der Backwaren in einer Aufnahmekammer erfasst und dem Verfahren zu Grunde gelegt werden kann. Dies erfolgt unter dem Gesichtspunkt, dass durch die zeitliche Veränderung der Anzahl, insbesondere des Gesamtgewichts, in einer Kammer durch die Maschinensteuerung bzw. den hier hinterlegten Algorithmus darauf geschlossen werden kann, welche Art von Backwaren derzeit besonders stark nachgefragt wird, wenn nämlich eine hohe zeitliche Veränderung (d. h. Verminderung) der Anzahl bzw. des Gewichts in der Kammer detektiert wird. Somit kann gezielt auf ein aktuelles Käuferverhalten rückgeschlossen und dafür gesorgt werden, dass stets die fragliche Art der Backwaren mit hohem Frischegrad ausreichend zur Verfügung steht.

Es sei auch erwähnt, dass es vorteilhaft sein kann, vor dem Auslösen des Backvorgangs zu prüfen, ob binnen eines vorgegebenen Zeitfensters noch eine andere Art Backwaren zum (Nach)Backen fällig wird, welches bei denselben oder zumindest ähnlichen Arbeitsparametern des Backofens zu backen sind. In diesem Falle kann gegebenenfalls das (Nach)Backen einer anderen Art von Backwaren vorgezogen werden, um die Hitze des Backofens optimal auszunutzen.

Der in der Maschinesteuerung gespeicherte Grenzwert wird bevorzugt als zeitvariante Größe vorgegeben. Hierbei ist insbesondere vorgesehen, dass der gespeicherte Grenzwert als Funktion des Wochentages und der Uhrzeit vorgegeben wird. Hiermit kann ein typisches Käuferverhalten im Verlauf einer Woche und in Abhängigkeit der Uhrzeit abgebildet werden, so dass die zur Verfügung gestellten Bestände an Backwaren optimiert werden können.

Die in der Maschinensteuerung gespeicherten Grenzwerte werden dabei bevorzugt für eine Anzahl verschiedener Gebäckarten gespeichert, wobei für jede Gebäckart individuelle Vorlaufzeiten für den Backvorgang, insbesondere jeweilige Zeiten für das Aufheizen des Backofens, hinterlegt sind.

Verfahrensgemäß wird daher dafür gesorgt, dass zu einem automatisch bestimmten Zeitpunkt das Backen von neuem Backgut gestartet wird, um in Abhängigkeit des Wochentages und der Uhrzeit jeweils die benötigte Menge an Backgut frisch zur Verfügung zu haben.

Die Maschinensteuerung kann über ein Signalelement (bevorzugt in Form einer optischen Anzeige mit konkretem Hinweis im Klartext) dem Servicepersonal in der Verkaufsstätte anzeigen, dass Backwaren einer bestimmten Art benötigt wird, und zwar genau zum richtigen Zeitpunkt, so dass das besagte Backgut zum richtigen Zeitpunkt zur Verfügung steht.

Hierzu wird nach Ansteuerung einer entsprechenden Anzeige (visuell, akustisch oder auch per Nachricht an ein Smartphone) durch die Maschinensteuerung dem Servicepersonal angezeigt, dass vorbereitetes Backgut (Teiglinge) aus der Kühlung zu nehmen ist, so dass der Teig eine hinreichende Gärzeit hat, bevor er in den Ofen verbracht wird. Den richtigen Zeitpunkt zum Einbringen des so vorbereiteten Backguts in den bereits vorgeheizten Ofen kann dann durch ein weiteres Signal dem Servicepersonal durch die Maschinensteuerung mitgeteilt werden.

Der Backofen selber wird zum gegebenen richtigen Zeitpunkt von der Maschinensteuerung eingeschaltet, so dass er unter Berücksichtigung der Backzeit die benötigte Backtemperatur aufweist.

Hierzu kann im Falle des Vorhandenseins mehrerer Backöfen durch die Maschinensteuerung auch ermittelt werden, welcher Backofen derzeit für das Backen eines konkret fälligen Backguts optimal ist. Hierzu erfasst die Maschinensteuerung die Temperaturen in den vorhandenen Backöfen, so dass derjenige Backofen von der Maschinensteuerung als Backofen für das konkrete Backgut vorgeschlagen wird, welcher zwecks Vorheizung den geringsten Energieverbrauch erfordert.

Um diese Vorgehensweise zu optimieren, kann in der Steuerungseinrichtung auch für jeden vorhandenen Backofen ein Wert für die Aufheizgeschwindigkeit des Ofens (z. B. in °C pro Minute) hinterlegt sein, so dass anhand der gemessenen Ist-Temperatur in einem Ofen genau der Zeitpunkt berechnet werden kann, zu dem mit dem Aufheizen begonnen werden muss, um dann zum richtigen Zeitpunkt die Backtemperatur erreicht zu haben.

Somit wird der Energieverbrauch verringert, wobei dennoch stets frisches Backgut in ausreichender Menge zur Verfügung steht.

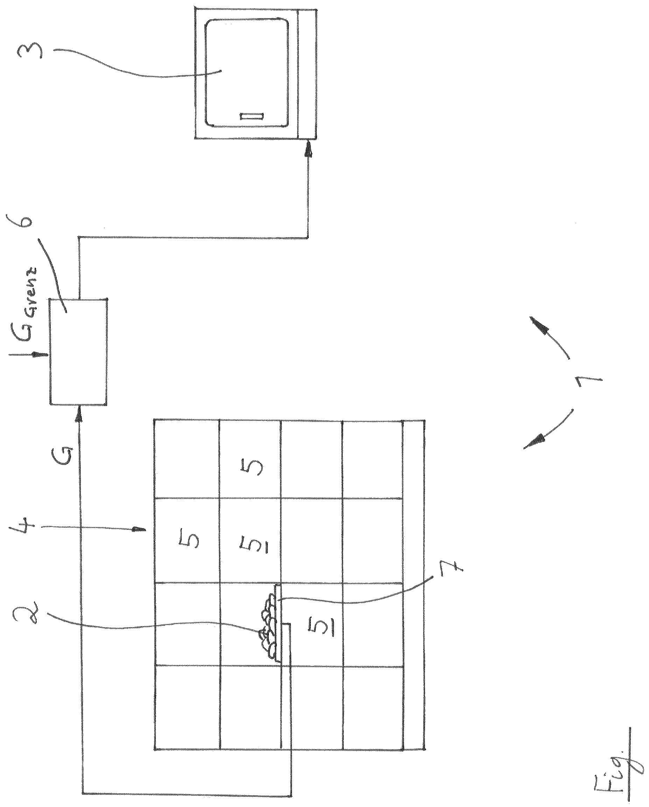

In der Figur ist ein Ausführungsbeispiel der Erfindung dargestellt. Die Figur zeigt schematisch eine Back- und Verkaufsanlage in einem Supermarkt.

In der Figur ist eine Back- und Verkaufsanlage 1 dargestellt, von der ein Backofen 3 sowie eine Verkaufsstation (Bake-Off-Station) 4 skizziert sind. Ferner ist eine Maschinensteuerung 6 dargestellt.

Die Verkaufsstation 4 umfasst eine Anzahl Aufnahmekammern 5 für unterschiedliche Arten von Backwaren 2, die in einer der Kammern schematisch skizziert sind.

Dabei ist insbesondere vorgesehen, dass mittels einer Waage 7 (die hier nur für eine der Aufnahmekammern 5 skizziert ist) das sich in einer Aufnahmekammer 5 jeweils befindliche Gesamtgewicht G eine Art der Backware ermittelt und an die Maschinensteuerung 6 weitergegeben wird. Über das ermittelte Gesamtgewicht kann dann leicht durch Division durch das Gewicht einer einzelnen Backware die Anzahl der sich in der Aufnahmekammer 5 befindlichen Backwaren ermittelt werden. Die Maschinensteuerung 6 umfasst auch Speichermittel, in der Grenzwerte G_{Grenz} für den Mindestbestand an Backwaren in den jeweiligen Aufnahmekammern 5 gespeichert sind.

Wird durch Entnahme von Backwaren 2 aus einer Aufnahmekammer 5 durch den Wiegeprozess mittels der Waage 7 durch die Maschinensteuerung 6 ermittelt, dass der vorgegebene Grenzwert G_{Grenz} für die entsprechende Backware erreicht oder unterschritten ist, veranlasst die Maschinensteuerung 6 die Auslösung eines (Nach)Backvorgangs, so dass neue Backwaren 2 für die entsprechende Aufnahmekammer 5 zur Verfügung gestellt wird.

Die Maschinensteuerung 6 veranlasst hierzu zunächst die Ausgabe eines Signals an das Servicepersonal, um aufzubackende Teiglinge, die in der Verkaufsstätte vorgehalten werden, aus der Kühlung zu nehmen und für den Backvorgang vorzubereiten; hierbei geht es in erster Linie um die Herausnahme von Teiglingen aus der Kühlung und das Auftauenlassen derselben (sofern diese in gefrorenem Zustand vorliegen), gleichermaßen aber auch um Liegenlassen der Teiglinge über eine Gärzeit, während derer die Teiglinge bei Umgebungstemperatur liegen müssen, um für den Backvorgang optimal tauglich zu werden.

In der Figur ist nicht näher zu sehen, dass das Auslösen des Backvorgangs die Ausgabe eines Hinweissignals umfasst; hierbei handelt es sich erfindungsgemäß um ein akustisches oder um ein visuelles Signal oder um das Versenden einer Nachricht an ein Smartphone, welches die Person mit sich trägt, welche für die Aufrechterhaltung des Betriebs der Anlage verantwortlich ist. So wird diese Person zum richtigen Zeitpunkt über anstehende fällige Maßnahmen informiert.

Das Auslösen des Backvorgangs umfasst dann auch das rechtzeitige Aufheizen des Backofens, so dass dieser rechtzeitig die benötigte Backtemperatur erreicht hat.

Es sei angemerkt, dass im Ausführungsbeispiel gemäß der Figur das alternative oder additive Verfahren der Ermittlung der Anzahl Backwaren 2 in der Aufnahmekammer 5 mittels einer Kamera nicht dargestellt ist. Durch eine oder mehrere Kameras kann indes in entsprechender Weise festgestellt werden, wie viele Backwaren sich in der Aufnahmekammer 5 befinden. Gegebenenfalls muss die Aufnahmekammer 5 hierzu besonders gestaltet werden, beispielsweise relativ flach, so dass die Kamera in einer Ansicht die Anzahl der Backwaren 2 erkennen kann.

Durch das vorgeschlagene Konzept unterstützt das Verfahren somit das Servicepersonal in effizienter Weise, damit stets in allen Aufnahmekammern eine hinreichende Menge an frischer Backware vorliegt.

### Bezugszeichenliste:

- 1: Back- und Verkaufsanlage
- 2: Backware
- 3: Backofen
- 4: Verkaufsstation (Bake-Off-Station)
- 5: Aufnahmekammer
- 6: Maschinensteuerung
- 7: Waage

- G: Gesamtgewicht einer Art der Backware
- G_{Grenz}: Grenzwert

## Patentansprüche

1. Verfahren zum Betreiben einer Back- und Verkaufsanlage (1) für das Backen und Verkaufen mindestens zweier verschiedener Backwaren-Arten (2), bei dem in einem Backofen (3) Backwaren mindestens einer Art gebacken werden und die gebackenen Backwaren (2) anschließend in eine Verkaufsstation (4) verbracht werden, die eine Anzahl Aufnahmekammern (5) für jeweils eine Art Backwaren (2) aufweist, aus denen Kundschaft die gewünschten Backwaren (2) entnehmen kann, wobei das Backen der Backwaren erfolgt durch:
a) Ermittlung der Anzahl der Backwaren oder der zeitlichen Veränderung der Anzahl der Backwaren, die sich in einer Aufnahmekammer (5) der Verkaufsstation (4) befinden;
b) Mittels einer Maschinensteuerung (6): Vergleichen der ermittelten Anzahl der Backwaren oder der zeitlichen Veränderung der Anzahl der Backwaren mit einem vorgegebenen Grenzwert (G_{Grenz}), der in der Maschinensteuerung (6) gespeichert ist;
c) Auslösen eines Backvorgangs, sobald der gemessene Wert (G) den gespeicherten Grenzwert (G_{Grenz}) unterschreitet,
**dadurch gekennzeichnet,**
**dass** das Auslösen des Backvorgangs gemäß Schritt c) die Ausgabe eines Hinweissignals umfasst, wobei das Hinweissignal ein akustisches oder ein visuelles Signal ist und/oder wobei das Hinweissignal das Versenden einer Nachricht an ein Smartphone ist.

2. Verfahren nach Anspruch 1, **dadurch gekennzeichnet, dass** die Ermittlung der Anzahl der Backwaren oder der zeitlichen Veränderung der Anzahl der Backwaren gemäß Schritt a) von Anspruch 1 durch Wiegen der Backwaren zwecks Bestimmung des Gesamtgewichts (G) der sich in einer Aufnahmekammer (5) befindlichen Backwaren (2) oder zwecks Ermittlung der zeitlichen Veränderung des Gesamtgewichts (G) erfolgt, wobei gemäß Schritt b) von Anspruch 1 in der Maschinensteuerung (6) ein Vergleichen des gemessenen Gesamtgewichts (G) oder der zeitlichen Veränderung des Gesamtgewichts mit einem vorgegebenen Grenzwert (G_{Grenz}) erfolgt.

3. Verfahren nach Anspruch 1, **dadurch gekennzeichnet, dass** die Ermittlung der Anzahl der Backwaren oder der zeitlichen Veränderung der Anzahl der Backwaren gemäß Schritt a) von Anspruch 1 durch Erfassung des Inhalt der Aufnahmekammer (5) mittels einer Kamera erfolgt, wobei die von der Kamera erfassten Bilder durch die Maschinensteuerung ausgewertet werden und wobei gemäß Schritt b) von Anspruch 1 in der Maschinensteuerung (6) ein Vergleichen der ermittelten Anzahl an Backwaren oder deren zeitliche Veränderung mit einem vorgegebenen Grenzwert erfolgt.

4. Verfahren nach Anspruch 2 und 3, **dadurch gekennzeichnet, dass** die Ermittlung der Anzahl der Backwaren oder der zeitlichen Veränderung der Anzahl der Backwaren gemäß Schritt a) von Anspruch 1 sowohl durch Wiegen als auch durch Erfassung des Inhalts der Aufnahmekammer (5) mittels einer Kamera erfolgt.

5. Verfahren nach einem der Ansprüche 1 bis 4, **dadurch gekennzeichnet, dass** beim Auslösen des Backvorgangs durch die Maschinensteuerung (6) gemäß Schritt c) von Anspruch 1 die dem Backvorgang vorangehenden Zeiten sowie die Zeiten für das Aufheizen des Backofens (3) berücksichtigt werden.

6. Verfahren nach Anspruch 5, **dadurch gekennzeichnet, dass** die dem Backvorgang vorangehenden Zeiten die Zeit für das Herausnehmen der zu backenden Backwaren aus der Kühlung, gegebenenfalls die Zeit für das Auftauen von Teiglingen und die gegebenenfalls relevanten Gärzeiten sind.

7. Verfahren nach einem der Ansprüche 1 bis 6, **dadurch gekennzeichnet, dass** der in der Maschinensteuerung (6) gespeicherte Grenzwert (G_{Grenz}) als zeitvariante Größe vorgegeben wird.

8. Verfahren nach Anspruch 7, **dadurch gekennzeichnet, dass** der in der Maschinensteuerung gespeicherte Grenzwert (G_{Grenz}) als Funktion des Wochentages und der Uhrzeit vorgegeben wird.

9. Verfahren nach einem der Ansprüche 1 bis 8, **dadurch gekennzeichnet, dass** die in der Maschinensteuerung (6) gespeicherten Grenzwerte (G_{Grenz}) für eine Anzahl verschiedener Arten Backwaren (2) gespeichert werden, wobei für jede Art der Backwaren individuelle Vorlaufzeiten für den Backvorgang, insbesondere jeweilige Zeiten für das Aufheizen des Backofens (3), hinterlegt sind.
